# FASCICULE DE BREVET EUROPEEN

(11) **EP 3 624 402 B1**
(45) Date de publication et mention de la délivrance du brevet: **09.02.2022**
(21) Numéro de dépôt: 19197365.0
(22) Date de dépôt: 13.09.2019
(51) Int. Cl.: H04L 12/26, H04L 29/06

(54) **PROCÉDÉ DE DÉTECTION DE SOURCES ILLÉGITIMES RESPONSABLES D'UNE ATTAQUE DISTRIBUÉE PAR DÉNI DE SERVICE PAR INONDATION DE LIEN ET INSTALLATION ASSOCIÉE**
DETEKTIONSVERFAHREN VON ILLEGALEN QUELLEN, DIE FÜR EINE DENIAL-OF-SERVICE-ATTACKE DURCH LINK-ÜBERSCHWEMMUNG VERANTWORTLICH SIND, UND ENTSPRECHENDE ANLAGE
METHOD FOR DETECTING ILLEGAL SOURCES RESPONSIBLE FOR AN ATTACK DISTRIBUTED BY DENIAL-OF-SERVICE THROUGH FLOODING OF LINK AND ASSOCIATED INSTALLATION

(30) Priorité: 13.09.2018 FR 1800954
(43) Date de publication de la demande: 18.03.2020
(73) Titulaire: Thales, 92400 Courbevoie (FR)
(72) Inventeur: BELABED, Dallal, 92230 GENEVILLIERS (FR); BOUET, Mathieu, 92230 GENEVILLIERS (FR); VANIA, Conan, 92230 GENEVILLIERS (FR)
(74) Mandataire: Lavoix

(56) Documents cités:
- WO-A1-2016/058631
- US-A1- 2018 255 094
- MORTENSEN ARBOR NETWORKS R MOSKOWITZ HUAWEI T REDDY MCAFEE A: "Distributed Denial of Service (DDoS) Open Threat Signaling Requirements; draft-ietf-dots-requirements-15.txt", DISTRIBUTED DENIAL OF SERVICE (DDOS) OPEN THREAT SIGNALING REQUIREMENTS; DRAFT-IETF-DOTS-REQUIREMENTS-15.TXT; INTERNET-DRAFT: DOTS, INTERNET ENGINEERING TASK FORCE, IETF; STANDARDWORKINGDRAFT, INTERNET SOCIETY (ISOC) 4, RUE DES FALAISES CH- 1205 GENE, no. 15, 29 août 2018 (2018-08-29), pages 1-20, XP015128312,

## Description

L'invention a pour domaine celui de la cybersécurité, et plus particulièrement celui des procédés de sécurité mis en œuvre en cas d'attaque distribuée par déni de service, aussi dénommée attaque DDoS (selon l'anglais « Distributed Denial of Service »).

Une attaque DDoS est une attaque devenue classique visant à dégrader ou interrompre les services, offerts au moyen d'un serveur, par une entreprise, une ville ou autre. Une telle attaque consiste à faire envoyer par une source illégitime un grand nombre de requêtes vers le serveur, cible de l'attaque, afin de saturer ce dernier et le rendre inaccessible aux clients légitimes.

Une attaque par déni de service est dite distribuée quand l'attaquant utilise plusieurs sources illégitimes pour cibler la victime de manière à démultiplier les requêtes de saturation à destination du serveur cible. Ces sources illégitimes résultent par exemple de l'usurpation d'adresses IP et de l'émission forcée de requêtes de saturation depuis ces adresses IP usurpées.

Le propriétaire du serveur cible, victime de l'attaque, peut cependant identifier facilement l'attaquant, car les requêtes de saturation reçues sur le serveur cible y sont stockées, comme toutes les requêtes incidentes, dans des fichiers de journalisation. L'analyse des requêtes de saturation et de leurs paramètres permet alors d'identifier la ou les sources de l'attaque et, par conséquent, l'attaquant.

Le document WO2016/058631 présente ainsi un procédé permettant de contrer une attaque DDoS classique, consistant à détecter une situation de saturation d'une procédure d'établissement d'une association de sécurité entre un client et un point d'agrégation de sécurité ; à renseigner une liste noire de clients, un client de cette liste étant un client non autorisé au sens où une précédente requête d'authentification émise par ce client a conduit à l'échec de la procédure d'établissement d'une association de sécurité ; en réponse à une nouvelle requête, à vérifier si le client requérant appartient à la liste noire ; et, dans l'affirmative, à rejeter ce client.

Cependant, ce type d'attaques par déni de service a récemment évolué en isolant la cible (serveurs, ville, université, entreprise, etc.) de la victime du reste du réseau en saturant certains des liens du réseau se trouvant sur les chemins d'accès à cette cible. Il ne s'agit donc plus ici de saturer directement la cible, mais certains liens spécifiques du réseau qui permettent d'accéder à la cible. Les requêtes des clients légitimes ne peuvent alors plus emprunter les chemins qui mènent à la cible et ne peuvent plus atteindre la cible. Ce type particulier d'attaques est dénommé dans le présent document « attaque DDoS par inondation de lien », par opposition à une attaque DDoS par inondation de serveur.

Des attaques DDoS par inondation de lien ont par exemple été décrites dans les articles M.S. Kang et al., «The crossfire attack», IEEE Symposium on Security and Privacy (SP), p. 127-141, 2013 et S.B. Lee et al., «Codef: collaborative defense against large-scale link-flooding attacks», the ninth ACM conférence on Emerging networking experiments and technologies, p. 417-428, 2013.

Les flux servant à saturer un lien cible n'étant pas dirigés vers le serveur cible mais vers des serveurs tiers accessibles via des chemins d'accès identiques ou proches de ceux permettant d'accéder à la cible et le ou les liens cibles n'étant pas sous sa responsabilité, la victime ne dispose d'aucun moyen pour identifier l'attaquant. Ainsi, ce type particulier d'attaques permet d'isoler la cible du réseau tout en laissant la victime dans l'incapacité d'identifier l'attaquant.

Les contremesures connues pour les attaques DDoS par inondation de serveur (par exemple listées dans le document W M Eddy et al., «TCP SYN Flooding Attacks and Common Mitigations,» RFC 4987, 2007) ne sont pas adaptées pour contrer une attaque DDoS par inondation de lien.

Les contremesures pouvant être mises en œuvre côté serveur cible en cas d'attaque DDoS par inondation de serveur ne sont pas adaptées pour contrer une attaque DDoS par inondation de lien, le serveur cible ne recevant pas les flux émis par l'attaquant.

Les contremesures pouvant être mises en œuvre côté réseau en cas d'attaque DDoS par inondation de serveur ne sont également pas adaptées. En effet, les attaques DDoS par inondation de lien se caractérisent par la multiplication de flux à bas débit et par des flux ayant les apparences de requêtes normales vers des serveurs tiers. Ces caractéristiques rendent ces attaques indétectables par les systèmes de détection d'attaque DDoS par inondation de serveur mis en œuvre côté réseau, par exemple au niveau des commutateurs du réseau.

L'invention a donc pour but de proposer un procédé et des moyens adaptés pour détecter et contrer une attaque DDoS par inondation de lien.

Pour cela l'invention a pour objet un procédé de détection de sources illégitimes responsables d'une attaque distribuée par déni de service - DDoS du type par inondation de lien selon la revendication 1.

Suivant des modes particuliers de réalisation, le procédé comporte les caractéristiques selon l'une quelconque des revendications 2 à 8.

L'invention a également pour objet une installation comportant un réseau de communication entre une pluralité de sources et une cible, le réseau étant constitué de nœuds et de liens, chaque lien connectant deux nœuds, selon la revendication 9.

De préférence, l'installation est telle que ledit procédé de détection est mis en œuvre par les nœuds et le contrôleur sous forme logicielle, de préférence sous la forme une architecture du type « Software-Defined Networking » - SDN.

L'invention et ses avantages seront mieux compris à la lecture de la description détaillée qui va suivre d'un mode de réalisation particulier, qui est donné uniquement à titre d'exemple non limitatif, la description étant faite en se référant aux dessins annexés, sur lesquels :
- La figure 1 est une représentation d'un mode de réalisation d'une installation pour la mise en œuvre du procédé de détection selon l'invention ;
- Les figures 2A et 2B sont des représentations schématiques respectivement d'un nœud et du contrôleur du réseau de l'installation de la figure 1 ;
- La figure 3 est une représentation sous forme de blocs du procédé selon l'invention mise en œuvre par le réseau de l'installation de la figure 1 ; et,
- Les figures 4A à 4D représentent différents états du réseau de l'installation de la figure 1 pour différentes itérations du procédé de la figure 3.

L'installation et le procédé selon l'invention sont donc spécifiques d'une attaque du type DDoS par inondation de lien, attaque qui consiste à saturer un ou plusieurs liens cibles du réseau afin de rendre inutilisables les chemins passant par ces liens cibles et menant au serveur cible de la victime.

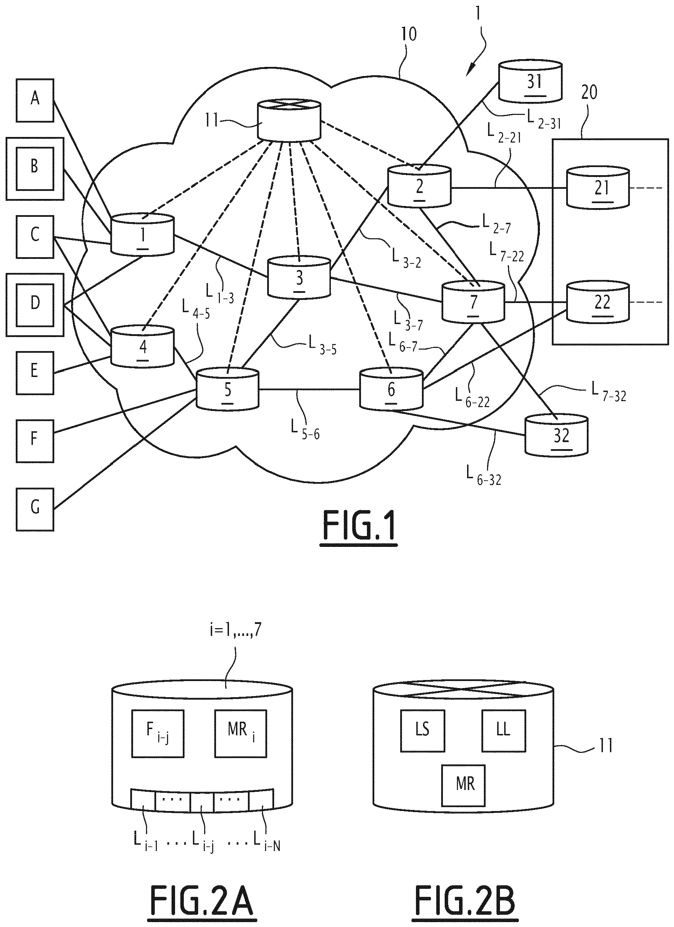

La mise en œuvre du procédé sera illustrée sur un modèle de réseau représenté à la figure 1.

L'installation 1 comporte un réseau 10, une pluralité de sources A à G, une zone cible 20 et des serveurs tiers 31 et 32.

Le réseau 10 constitue une interface de communication entre la pluralité de sources, d'une part, et la zone cible, d'autre part.

La pluralité de sources comporte des sources légitimes, telles que les sourcs A, C, E, F et G, et des sources illégitimes, telles que les sources B et D, qui sont des sources commandées par un attaquant dans le but d'inonder des liens cibles.

La zone cible 20 comporte notamment deux serveurs 21 et 22 de connexion de la zone cible 20 au réseau 10. La zone cible 20 regroupe l'ensemble des machines que l'attaquant cherche à isoler du réseau 10 par une attaque adaptée. Elle comporte notamment le ou les serveurs de la victime qui permettent d'offrir un service donnée aux utilisateurs légitimes.

Les serveurs tiers 31 et 32 sont des machines distinctes de celles de la victime. Il s'agit par exemple de serveurs publics. Ils présentent la particularité d'être installés au voisinage de la zone cible 20 au sens où les chemins menant à ces serveurs tiers sont identiques aux chemins menant à la zone cible 20, ou tout au moins partagent des portions communes. L'attaquant émet de préférence les flux de saturation à destination de ces serveurs tiers plutôt qu'à destination du serveur cible, pour ne pas être identifié par la victime.

Le réseau 10 comporte des liens et des nœuds. Un lien Li-j connecte les deux nœuds i et j entre eux, de préférence de manière bidirectionnelle.

Le réseau de la figure 1 comporte sept nœuds référencés 1 à 7. Les liens du réseau sont alors référencés L₁₋₃, L₃₋₂, L₄₋₅, L₃₋₅, L₃₋₇, L₅₋₆ et L₆₋₇.

Les liens de connexion d'un nœud du réseau 10 avec un serveur de la zone cible 20 sont notés L₂₋₂₁, L₇₋₂₂ et L₆₋₂₂.

Les liens de connexion d'un nœud du réseau 10 avec les serveurs tiers sont notés L₂₋₃₁, L₇₋₃₂ et L₆₋₃₂.

L'adversaire construit son attaque de la manière suivante :
- dans une première phase de cartographie des chemins qui lui sont affectés par les moyens de routage du réseau pour acheminer un paquet de données d'une source illégitime à un destinataire. Chaque source de l'adversaire émet notamment des requêtes d'identification (opérateur « traceroute ») vers un ou des destinataires situés sur le réseau à proximité de la zone cible, ces requêtes d'identification demandant à chaque commutateur du réseau le long du chemin suivi par le paquet de données de s'identifier ; en multipliant les sources et les destinataires, l'adversaire établit une cartographie partielle du réseau dans un voisinage du serveur cible.
- dans une seconde phase de configuration de l'attaque, l'adversaire détermine l'ensemble des liens présents dans la cartographie, dont la mise hors service maximiserait l'isolement du serveur cible ; cet ensemble de liens constitue les liens cibles sur lesquels va porter l'attaque.
- Finalement, dans une phase de coordination et d'attaque, l'adversaire assigne à chacune des sources qu'il contrôle l'émission d'au moins un flux dont le chemin vers un destinataire passe par l'un des liens cibles, de sorte que le débit total des flux sur ce lien cible soit légèrement supérieur à la capacité du lien cible.

Cette construction conduit par exemple à l'identification des liens L₃₋₂ et L₆₋₇ du réseau 10 comme liens cibles d'une attaque possible afin de bloquer les chemins menant aux serveurs 21 et 22. Une attaque DDoS par inondation de lien consiste alors à ce que les sources illégitimes B et D émettent des flux de données vers les serveurs tiers 31 et 32 de manière à saturer les liens L₃₋₂ et L₆₋₇.

La mise en œuvre du procédé de détection selon l'invention s'appuie, pour sa partie locale, sur les nœuds 1 à 7 du réseau 10, et, pour sa partie centrale, sur un contrôleur 11 appartenant au réseau 10.

Dans le présent mode de réalisation, chacun des nœuds i (entier entre 1 et 7) du réseau 10 est un nœud possédant au moins une fonction de commutateur.

Le contrôleur 11 est une machine en communication avec les différents nœuds du réseau. Ceci est représenté par des lignes en pointillés sur la figure 1. Il s'agit de préférence d'un contrôleur de routage déjà présent dans les réseaux pour l'établissement des tables de routage. En variante, il peut s'agir d'un ordinateur additionnel dédié à la mise en œuvre de la partie centrale du procédé.

Avantageusement, l'invention est mise en œuvre sous forme logicielle au moyen d'une couche additionnelle exécutée par chacun des nœuds du réseau pour la partie locale et par le contrôleur pour la partie centrale du procédé.

De préférence, cette mise en œuvre logicielle est conforme à l'architecture connue sous la dénomination « Software-Defined Networking » (SDN), le contrôleur 11 étant alors un contrôleur SDN (« SDN controller») et les nœuds 1 à 7 étant des dispositifs de réseau logique (« SDN datapath »).

Comme représenté sur la figure 2A, un nœud i du réseau 10 est un ordinateur comportant des moyens de calcul et des moyens de mémorisation, les moyens de mémorisation comportant les instructions de programmes d'ordinateur dont l'exécution par les moyens de calcul permettent la mise en œuvre d'algorithmes, notamment la mise en œuvre des étapes locales du procédé selon l'invention.

Un nœud i comporte autant de ports d'entrée-sortie de communication que de liens Li-j le connectant à d'autres nœuds j du réseau, dits nœuds voisins. Si N est le nombre de lien du nœud i, alors j est un entier entre 1 et N.

Chaque nœud i comporte une matrice de routage locale MRi, une liste locale de sources Fi-j relatives aux sources dont les flux circulent à l'instant courant sur le lien Li-j.

Comme représenté sur la figure 2B, le contrôleur 11 est un ordinateur comportant des moyens de calcul et des moyens de mémorisation, les moyens de mémorisation comportant les instructions de programmes d'ordinateur dont l'exécution par les moyens de calcul permettent la mise en œuvre d'algorithmes, notamment la mise en œuvre les étapes centrales du procédé selon l'invention.

Le contrôleur 11 comporte une table de routage globale MR, une liste consolidée de sources LS, et une liste consolidée de liens LL.

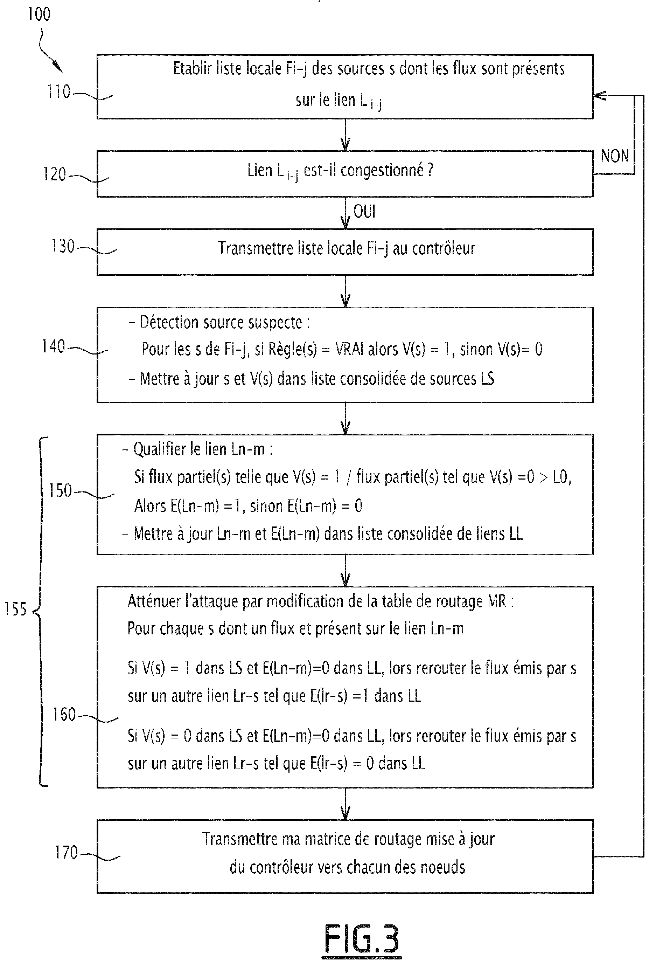

Un mode de réalisation particulièrement avantageux du procédé de détection selon l'invention va être décrit en référence avec la figure 3.

Dans ce mode de réalisation, le procédé permet non seulement la détection de sources suspectes, c'est-à-dire de sources identifiées avec une grande probabilité comme illégitimes et contrôlées par un adversaire responsable d'une attaque DDoS par inondation de lien, mais également l'atténuation des effets de cette attaque.

Le procédé 100 comporte des étapes réalisées par chacun des nœuds i du réseau de manière à collecter une information locale, et des étapes réalisées par le contrôleur 11 à partir des informations locales qui lui sont transmises par les nœuds i, de manière à obtenir une vision globale du réseau et des évènements l'affectant.

Périodiquement, à l'étape 110, chaque nœud i met à jour, pour chacun de ses liens Li-j, une liste locale de sources Fi-j.

La liste locale de sources Fi-j à l'instant t comporte des caractéristiques relatives à chacun des flux circulant sur le lien Li-j. Il s'agit au moins d'un identifiant du flux (par exemple constitué par l'association d'un identifiant de la source du flux et d'un identifiant du destinataire du flux) et d'une grandeur correspondant au débit de ce flux.

Un flux n'est pas un unique paquet, mais la succession de paquets d'une session de communication entre une même source et un même destinataire.

A l'étape 120, à la suite de la mise à jour des listes locales de sources Fi-j de chacun de ses liens, le nœud i détermine l'état de congestion de chacun de ses liens Li-j.

Pour un lien Li-j, le nœud i additionne par exemple les débits des différents flux, tels qu'indiqués dans la liste locale de sources Fi-j, afin de calculer une bande passante utilisée ou débit total. Le nœud i compare ensuite cette bande passante utilisée avec la bande passante de référence ou capacité du lien Li-j. Cette caractéristique du lien Li-j est une donnée prédéfinie connue du nœud i.

Si la réponse à ce test de congestion est négative, la bande passante utilisée restant inférieure à la bande passante de référence, le nœud i conclut que le lien Li-j n'est pas congestionné. Le procédé passe au test de congestion du lien suivant et, lorsque l'ensemble des liens du nœud i, a été passé en revue sans qu'aucune congestion n'ait été détectée, le procédé retourne à l'étape 110 de mise à jour des listes locales de sources pour l'instant suivant t+dt.

Si en revanche la réponse à ce test de congestion est positive pour au moins l'un des liens, par exemple le lien Li-j, la bande passante utilisée étant supérieure ou égale à la bande passante de référence pour ce lien, le nœud i conclut que le lien Li-j est congestionné.

Il est à noter qu'à ce stade, la cause de la congestion du lien n'est pas connue : il peut s'agir d'un évènement fortuit (utilisation d'une bande passante trop importante par des sources légitimes associées à un flux vidéo par exemple) ou un évènement du type attaque DDoS par inondation du lien Li-j.

Le procédé avance alors à l'étape 130, dans laquelle le nœud i transmet au contrôleur 11, la liste locale de sources Fi-j à l'instant courant.

A l'étape 140, le contrôleur 11 reçoit la liste locale de sources Fi-j et met en œuvre une détection du comportement des sources s dont les flux sont indiqués dans la liste locale de sources Fi-j reçue.

Plus particulièrement, pour une source s dont un flux apparait dans la liste locale de sources Fi-j, le contrôleur met en œuvre une ou plusieurs règles de détection pour qualifier cette source soit en tant que source sûre (c'est-à-dire identifiée avec une forte probabilité comme une source légitime), soit en tant que source suspecte (c'est-à-dire identifiée avec une forte probabilité comme une source illégitime contrôlée par un attaquant dans un évènement du type attaque DDoS par inondation de lien).

Dans un mode de réalisation simple, le contrôleur 11 met en œuvre une première règle visant à quantifier le nombre de fois qu'une source s est impliquée dans des événements de congestion de lien survenus sur le réseau 10 dans une fenêtre temporelle entre un instant passé et l'instant courant. Cette première règle peut par exemple consister à tenir à jour un score T pour chaque source s, et à incrémenter ce score d'une unité à chaque fois que la source s est mentionnée dans une liste locale de source retournée par un nœud détectant la congestion de l'un de ses liens. Si le score T de la source s reste au-dessous d'une valeur seuil T0 prédéfinie, la source est qualifiée de sûre. A défaut, elle est qualifiée de suspecte.

En variante ou en outre, le contrôleur 11 met en œuvre une seconde règle visant à vérifier si le débit total du ou des flux associés à la source s est, à l'instant courant, supérieur à un débit moyen associé à la source s.

En variante ou en outre, le contrôleur met en œuvre une troisième règle visant à vérifier si, une fois le flux rerouté sur un autre chemin ne comportant plus le lien Li-j (cf. étape d'atténuation de l'attaque ci-dessous), la source s cesse d'émettre le flux incriminé dans la congestion du lient Li-j. En effet, l'arrêt brusque de l'émission d'un flux est la signature d'une source illégitime.

En variante ou en outre, le contrôleur met en œuvre une quatrième règle visant à vérifier si, une fois le flux rerouté sur un autre chemin ne comportant plus le lien Li-j (cf. étape d'atténuation de l'attaque ci-dessous), la source s augmente le débit de ses flux afin de chercher à congestionner l'un ou l'autre des liens du nouveau chemin qui lui est ouvert pour acheminer ses flux.

Il est à noter que, par exemple pour la seconde règle, le débit moyen de la source s peut par exemple être évalué sur une période de temps longue par le contrôleur 11. Pour ce faire le contrôleur doit connaitre l'activité de la source s à chaque instant, que la source soit ou non impliquée dans un évènement de congestion. Pour la mise en œuvre d'une telle règle, nécessitant de connaître l'activité d'une source particulière à travers le temps ou à travers le réseau (cas d'un reroutage), la liste Fi-j est en fait transmise au contrôleur sans attendre la survenue d'un évènement de congestion.

Si la source s vérifie la ou les règles de détection mises en œuvre par le contrôleur, ou encore une combinaison (éventuellement pondérée) de plusieurs règles de détection, le contrôleur la considère comme suspecte, c'est-à-dire identifiée avec une forte probabilité comme illégitime. Sinon, il la considère comme sûre, c'est-à-dire identifiée avec une forte probabilité comme légitime.

Chaque source s ayant été rapportée au contrôleur à travers une liste Fi-j constitue une entrée dans une liste consolidée de sources LS. Cette entrée est associée à différents champs, notamment le débit des flux de cette source s à différents instants, passés et présent, d'itération du procédé, ou encore la valeur courante de paramètres associés à des règles de détection (tels que le score T de la première règle de détection ), ainsi qu'un statut dont la valeur V(s) prend la valeur 1 lorsque la source est qualifiée de suspecte et la valeur 0 lorsque la source est qualifiée de sûre. La liste consolidée de sources LS est donc mise à jour à l'issue de l'étape 140.

Ainsi une source considérée comme sûre à un instant, mais qui vérifie une règle de détection à l'instant suivant voit son statut évoluer.

De manière similaire, il peut en variante être prévu qu'une source « suspecte » voit son statut requalifié en « sûre », si cette source cesse de vérifier une règle de détection. Par exemple, si la source s cesse pendant un laps de temps prédéfini d'apparaître dans des évènements de congestion du réseau, son statut est requalifié.

A l'étape 155, le contrôleur met à jour la table globale de routage MR du réseau pour atténuer l'attaque et laisser le temps à l'étape de détection 140 de converger au cours de plusieurs itérations du procédé 100.

Dans une première étape 150, le contrôleur 11 qualifie les liens Ln-m du réseau en leur associant un état pouvant prendre la valeur «suspect» (E(Ln-m)= 1) ou «sûr» (E(Ln-m) = 0).

Un lien sera dit suspect lorsqu'il respecte un critère laissant supposer qu'il est la cible d'une attaque DDoS par inondation de lien. A défaut, il sera dit sûr.

Un critère possible consiste à déterminer si le débit partiel des flux des sources considérées comme suspectes selon la liste LS sur le lien Ln-m divisé par le débit partiel des flux des sources considérées comme sûres selon la liste LS sur le lien Ln-m est supérieur à un rapport seuil L0.

En variante, d'autres critères peuvent être envisagés. Il s'agit ici de classer les liens en lien pouvant être des liens cibles et des liens qui ne semblent pas être attaqués. En effet, il peut se faire qu'un lien soit inondé, mais pas à cause d'une attaque, mais simplement par un trop grand nombre de flux légitimes. Un lien congestionné n'est donc pas forcément considéré comme un lien suspect.

A l'issue de l'étape 150, le contrôleur met à jour une liste consolidée de liens LL stockant notamment l'identifiant du lien Ln-m et son état courant. La liste LL est initialisée avec des états sûrs pour tous les liens du réseau au début de la mise en œuvre du procédé. Elle n'est pas réinitialisée à chaque itération du procédé, de manière à conserver une mémoire des liens sûrs et des liens suspects au cours de l'utilisation du réseau 10.

Puis, à l'étape 160, le contrôleur 11 altère la matrice globale de routage MR de manière à permettre une atténuation de l'attaque. Pour ce faire, le contrôleur utilise par exemple les conditions suivantes de reroutage :
Si le flux circulant sur le lien Ln-m est associé à une source suspecte (V(s)=1) dans la liste LS, et si le lien Ln-m est sûr (E(Ln-m)=0) selon la liste LL, alors le flux est rerouté sur un autre chemin composé de liens suspects selon la liste LL, ou tout au moins en cherchant à augmenter le nombre de liens suspects sur le nouveau chemin ouvert à ce flux, par exemple en sélectionnant un autre lien Ln-q issu du nœud n qui soit suspect (E(Ln-q)=1) pour le routage de ce flux.

Si le flux circulant sur le lien Ln-m est associé à une source sûre (V(s)=0) selon la liste LS, et si le lien Ln-m est considéré comme suspect (E(Ln-m)=1) selon la liste LL, alors le flux est rerouté sur un chemin composé de liens sûrs selon la liste LL ou tout au moins en cherchant à augmenter le nombre de liens sûrs sur le nouveau chemin ouvert à ce flux, par exemple en sélectionnant un autre lien Ln-q issu du nœud n qui soit sûr (E(Ln-q)=0) pour le routage de ce flux.

Le contrôleur 11 met ainsi à jour la table globale de routage MR à l'instant courant.

A l'étape 170, le contrôleur 11 transmet tout ou partie de la table globale de routage mise à jour aux différents nœuds i du réseau pour qu'ils mettent à jour leur table locale de routage MRi pour le routage des flux.

Puis le procédé reprend à l'étape 110 pour l'instant suivant t+dt.

Le procédé est itéré intégralement tant que le lien Li-j reste saturé.

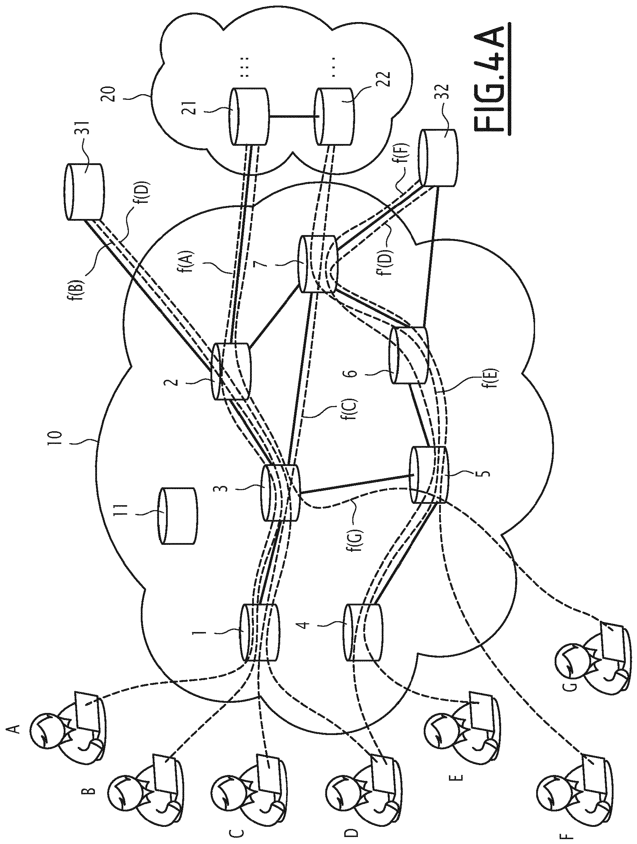

La mise en œuvre du procédé de détection 100 est illustrée sur les figures 4A à 4D. Ces figures reprennent le réseau de la figure 1 (à l'exception des connections entre le contrôleur 11 et chacun des nœuds pour des raisons de clarté). Les chemins suivis par les flux f(s) émis par les différentes sources s (s entre A et G) sont indiqués par des traits en pointillés.

A la figure 4A, les liens L₃₋₂ et L₆₋₇ (représentés en gras) sont des liens cibles dans une attaque DDoS par inondation de lien visant à zone cible 20 : les sources illégitimes B et D émettent des flux f(B) et f(D) à destination du serveur tiers 31 qui, combinés avec le flux f(A) de la source légitime A vers le serveur 21, et le flux f(G) de la source légitime G vers le serveur 22, dépassent la capacité du lien L₃₋₂; De manière similaire, la capacité du lien L₆₋₇ est dépassée par le débit total des flux f'(D) (émis par la source illégitime D vers le serveur tiers 32), f(E) (émis par la source légitime E vers le serveur 22) et f(F) (émis par la source légitime F vers le serveur tiers 32).

Le nœud 3 identifiant que le lien L₃₋₂ est congestionné, transmet la liste locale de sources F₃₋₂ au contrôleur 11. Cette liste identifie les sources A, B, D et G comme impliquées dans l'événement de congestion.

De la même manière, le nœud 6 identifiant que le lien L₆₋₇ est congestionné, transmet la liste locale de sources F₆₋₇ au contrôleur 11. Cette liste identifie les sources D, E et F comme impliquées dans l'événement de congestion du lien L₆₋₇.

Le contrôleur 11 met alors en œuvre l'étape de détection. La source D étant impliquée dans la congestion simultanée de deux liens du réseau peut être qualifiée de suspecte selon une règle de détection correspondant à la première règle ci-dessus.

Le contrôleur 11 met ensuite en œuvre l'étape d'altération de la table de routage pour minimiser l'attaque, et renvoi cette dernière aux différents nœuds.

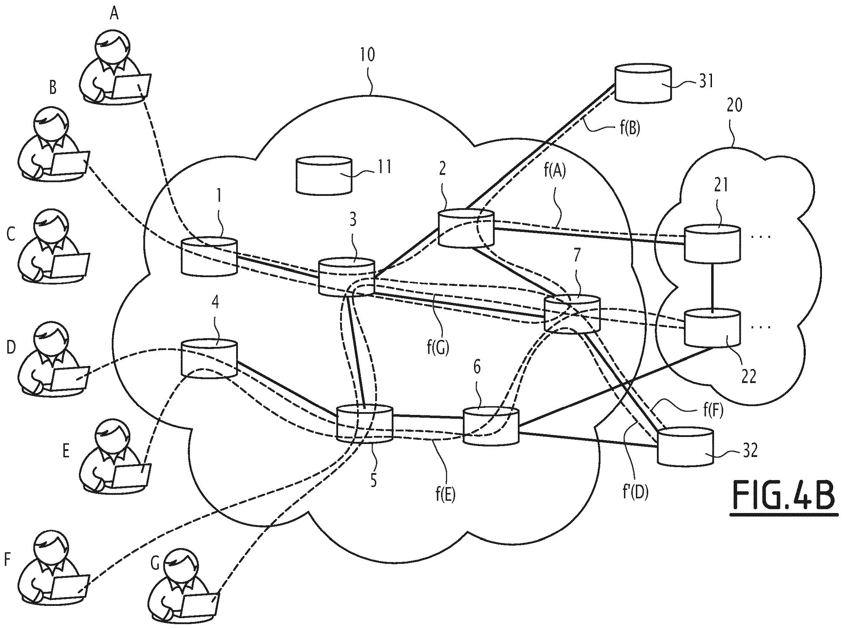

A la figure 4B, après mise à jour de leur table de routage locale, les nœuds routent les flux de manière à limiter ou supprimer la congestion des liens identifiés comme congestionnés à l'itération précédente du procédé.

Ainsi par exemple, le nœud 3 rééquilibre les flux entre le lien L₃₋₂ et le lien L₃₋₇.

Les flux f(B), f(D) et f(G) sont par exemple reroutés pour passer sur le lien L₃₋₇.

Constatant que son flux est rerouté sur le lien L₃₋₇, la source illégitime D, qui cherchait à saturer le lien L₃₋₂, cesse immédiatement d'émettre le flux f(D). Cette information, remontée au contrôleur 11 par le nœud 3 lors de l'itération suivante du procédé 100, permet d'identifier la source D comme suspecte selon une règle de détection correspondant à la troisième règle ci-dessus.

La source légitime C cesse fortuitement d'émettre le flux f(C). Ce comportement risque de conduire à l'identification de la source C comme suspecte (faux positif) selon la troisième règle mais pas selon la première règle. La combinaison de règle s'avère donc plus efficace.

De manière similaire, le nœud 5 rééquilibre les flux entre le lien L₅₋₆ et le lien L₃₋₅. Le flux f(F) est par exemple reroutés pour passer sur le lien L₃₋₅.

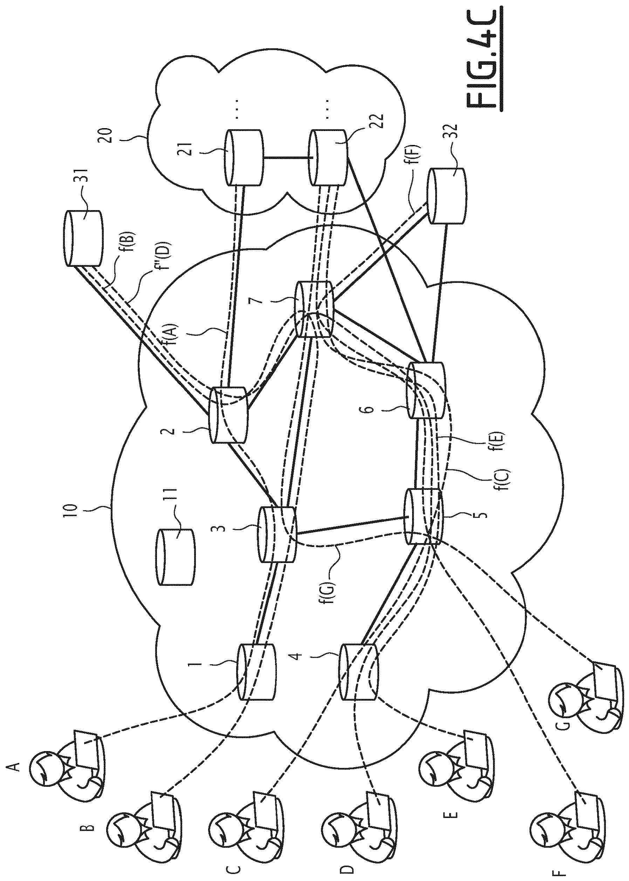

A la figure 4C, constatant que les liens initialement ciblés ne sont plus inondés, l'adversaire modifie son attaque par exemple en cherchant à inonder le lien L₃₋₇, qui est un lien connu de l'adversaire car appartenant au chemin sur lequel est maintenant routé le flux f(B) issu de la source illégitime B.

Pour cela, la source illégitime B augment le flux du débit f(B).

La source D modifie également son comportement en participant à l'inondation du lien L₃₋₇ en transmettant un flux f"(D) vers le serveur tiers 31 et en cessant d'émettre le flux f(D)

L'événement congestion du lien L₃₋₇ conduit le nœud 3 à transmettre au contrôleur 11 un fichier F₃₋₇ identifiant les sources impliquées B, D et G et les caractéristiques des flux associés..

La récurrence de l'activité des sources D et B dans l'inondation de liens au cours du temps, permet d'identifier la source B comme également suspecte par application d'une règle de détection du type de la première règle indiquée ci-dessus (présence de la source dans deux évènements de congestion à des instants différents de l'utilisation du réseau).

Le changement de comportement de la source B peut également permettre de la classée comme suspecte par application d'une règle de détection du type de la quatrième règle indiquée ci-dessus.

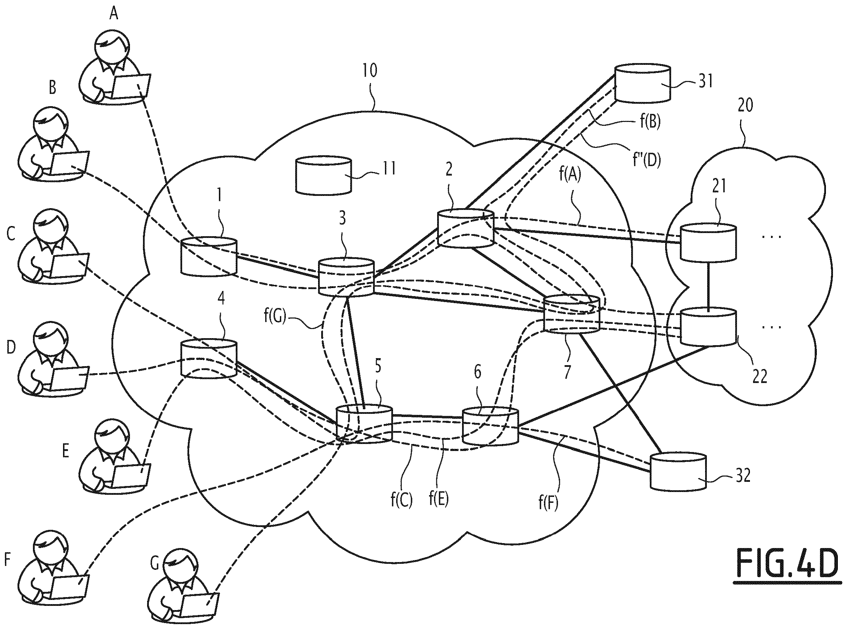

Finalement à la figure 4D, les sources D et B classées par le contrôleur 11 comme suspectes auront leurs flux reroutés sur le lien L₃₋₇, qui, par vérification de la contrainte correspondante, sera dans l'état « suspect». Au contraire, la source G classée comme sûre verra son flux rerouté sur le lien L₃₋₂, qui, par vérification de la contrainte correspondante, sera dans l'état « sûr ».

Il est à noter que les liens voisins d'un lien suspect utilisé pour canaliser les flux de l'attaquant ne sont pas connus de l'attaquant puisqu'ils ne sont pas visibles de ce dernier. En effet, même s'il connaissait l'existence à un certain moment d'un des liens voisins, cela n'a plus d'importance, car l'adversaire ne peut pas forcer le routage de ces flux en passant par ce lien voisin. C'est le contrôleur qui route les flux à sa convenance et l'attaquant utilise les chemins que le contrôleur lui propose.

Ces liens voisins sont associés à un état « sûr ». Ils sont donc accessibles pour les sources sûres, qui peuvent par conséquent accéder à la zone cible 20. Celle-ci n'est donc pas isolée du reste du réseau 10.

Ainsi, de manière générale, le procédé de détection selon l'invention consiste, en cas de congestion d'un lien, à identifier chacune des sources dont les flux causent cette congestion et à suivre le comportement de ces sources, éventuellement et de préférence après reroutage.

Avantageusement, pour permettre la convergence de l'étape de détection, c'etst-à-dire lui permettre de conduire à l'établissement de la liste consolidée de sources indiquant l'ensemble des sources suspectes, le procédé comporte une étape de reroutage de manière à faire passer les flux de sources suspectes préférentiellement sur des liens suspects et ceux des sources sures sur des liens surs. De cette manière, les flux des sources sûres atteignent la zone cible.

De plus, en confinant les sources suspectes sur des liens suspects, on évite que l'attaquant ne découvre les différents chemins de routage possibles, c'est-à-dire la topologie du réseau.

Il est à noter que la notion de lien suspect correspond finalement à un lien qui fait partie d'une route qui achemine des sources suspectes. Avec le procédé selon l'invention, les flux de l'attaquant ne passant pas sur les liens sûrs, ces derniers restent essentiellement masqués pour l'attaquant.

Le mode de réalisation du procédé présenté ci-dessous peut connaître de nombreuses variantes, en particulier dans la répartition des tâches entre nœuds et contrôleur. Par exemple, tout ou partie des règles de détection peuvent être mises en œuvre au niveau local, notamment les règles associées au suivi du débit d'un flux au cours du temps. Ainsi la liste locale de sources peut déjà contenir une préqualification de la source comme suspecte ou sûre, que le contrôleur prendra en compte pour la qualification finale de cette source.

De la même manière, l'altération de la matrice de routage peut en variante être effectuée par les nœuds à partir de la liste consolidée de sources et de la matrice de routage brute, transmises par le contrôleur.

De même, l'état d'un lien peut être déterminé localement par un nœud à partir des informations de la liste consolidée de sources que lui transmet le contrôleur dans ce cas.

Si quatre possibilités de règles de détection ont été plus particulièrement présentées ci-dessus, l'homme du métier saura comment établir d'autres règles de détection pertinentes, notamment à partir des informations relatives aux flux que les nœuds sont capables de mettre à la disposition du contrôleur.

En variante, seuls certains liens particuliers du réseau sont des liens susceptibles de constituer les cibles d'une attaque. Ainsi, l'état d'un lien du réseau prend alors avantageusement trois valeurs : «suspect », « sûr» ou « neutre ». Le reroutage d'un flux « suspect » (respectivement « sûr») veillera alors à ce que tous les liens constitutifs du nouveau chemin soient dans l'état neutre ou dans l'état suspect (respectivement « sûr»). Cette variante permet la détermination de chemins alternatifs uniquement sur des portions sensibles des chemins.

En variante encore, au lieu de donner des valeurs binaires au statut des sources et/ou à l'état des liens, ces attributs peuvent prendre par exemple une valeur réelle entre 0 et 1 correspondant à une probabilité d'identification d'une source ou d'un lien comme sûr (0) ou suspect (1).

Dans encore une autre variante indépendante des précédents, les nœuds pour la mise en œuvre du présent procédé ne constituent qu'un sous-ensemble de tous les nœuds du réseau, c'est-à-dire que seuls certains nœuds du réseau, dits nœuds spéciaux, mettent en œuvre le procédé selon l'invention. Ces nœuds spéciaux sont des nœuds particuliers du réseau, comme des passerelles entre deux sous-domaines. La notion de lien selon le présent procédé est alors à comprendre comme l'ensemble des routes permettant l'échange de paquets entre deux nœuds spéciaux.

## Revendications

1. Procédé (100) de détection de sources illégitimes responsables d'une attaque distribuée par déni de service - DDoS du type par inondation de lien dans un réseau (10) constitué de nœuds et de liens, chaque lien (Li-j) connectant deux nœuds (i, j), les nœuds ayant au moins une fonction de commutateur réseau, l'attaque ayant pour but d'isoler une cible (20) connectée au réseau en inondant au moins un lien du réseau, dit lien cible, au moyen d'une pluralité de flux émis par une pluralité de sources connectées au réseau, la pluralité de sources comportant les sources illégitimes et des sources légitimes, de sorte que le débit total sur le lien cible dépasse une capacité dudit lien cible, le réseau comportant en outre un contrôleur (11) propre à communiquer avec chacun des nœuds,
**caractérisé en ce que** le procédé consiste à :
- mettre à jour (110), par chaque nœud (i) et pour chaque lien (Li-j) issu dudit nœud, une liste locale de sources (Fi-j) associée audit lien, recensant les sources dont les flux circulent sur ledit lien à l'instant considéré ;
- déterminer (120), par chaque nœud (i) l'état de congestion de chaque lien (Li-j) issu dudit nœud à partir de la liste locale de sources (Fi-j) associée audit lien ;
- lorsque l'état dudit lien est congestionné, ledit nœud (i) transmet (130) au contrôleur (11, la liste locale de sources (Fi-j) associée audit lien,
- mettre en œuvre (140), par le contrôleur (11), au moins une règle de détection sur chaque source indiquée dans ladite liste locale, ladite règle de détection permettant de suivre un comportement de ladite source ; et,
- si ladite source vérifie ladite règle de détection, attribuer par le contrôleur (11) à ladite source un statut « suspect », sinon attribuer à ladite source un statut « sûr» ; et,
- mettre à jour, par le contrôleur (11), une liste consolidée de sources (LS) comportant au moins les sources dont le statut à l'instant courant est « suspect ».

2. Procédé (100) selon l'une quelconque des revendications précédentes, dans lequel l'étape consistant à vérifier (120) si un lien (Li-j) est congestionné consiste à calculer, par l'un au moins des deux nœuds reliés par ledit lien, un débit total des flux circulant à l'instant considéré sur ledit lien et à comparer le débit total calculé à une capacité de référence dudit lien, ledit lien étant congestionné lorsque le débit total est supérieur ou égal à la capacité de référence.

3. Procédé (100) selon l'une quelconque des revendications précédentes, dans lequel l'une et/ou l'autre des étapes consistant à vérifier (120) si ledit lien (Li-j) est congestionné, à mettre en œuvre (140) au moins une règle de détection, et à attribuer à ladite source un statut « suspect » ou «sûr », est réalisée par au moins un des deux nœuds (i, j) reliés par ledit lien ou par le contrôleur (11), les informations requises pour ces étapes étant échangées entre ledit au moins un des deux nœuds reliés par ledit lien et le contrôleur.

4. Procédé (100) selon l'une quelconque des revendications précédentes, dans lequel ladite au moins une règle de détection est choisie parmi :
- une première règle visant à vérifier si un nombre de fois qu'une source est impliquée dans une congestion de lien est supérieur à un score prédéfini (T0) ;
- une seconde règle visant à vérifier si un débit agrégé des flux associés à une source est, à l'instant courant, supérieur à un débit moyen associé à ladite source ;
- une troisième règle visant à vérifier si, une fois un flux d'une source rerouté sur un autre chemin, ladite source cesse d'émettre ledit flux ;
- une quatrième règle visant à vérifier si, une fois un flux d'une source rerouté sur un autre chemin, ladite source augmente un débit dudit flux.

5. Procédé (100) selon l'une quelconque des revendications précédentes, **caractérisé en ce qu'**il comporte en outre les étapes consistant à :
- qualifier (150) un lien (Ln-m) du réseau en vérifiant un critère fondé sur le statut des sources dont les flux circulent sur ledit lien à l'instant considéré, le statut des sources étant donné par la liste consolidée de sources (LL), ledit lien étant associé à un état « suspect » lorsque ledit critère est respecté et à un état «sûr» lorsque le critère n'est pas respecté ;
- rerouter (160) un flux d'une source acheminé sur un premier chemin pour qu'il soit acheminé sur un second chemin, en fonction du statut de ladite source, donné par la liste consolidée de sources (LL), et de l'état d'au moins un lien du premier chemin.

6. Procédé (100) selon la revendication 5, dans lequel le critère pour qualifier un lien se « suspect » consiste à vérifier si un débit partiel des flux sur ledit lien dont les sources ont un statut « suspect » divisé par un débit partiel des flux sur ledit lien dont les sources ont un statut « sûr» est supérieur à un seuil de référence (L0).

7. Procédé (100) selon la revendication 5 ou la revendication 6, dans lequel l'étape consistant à rerouter un flux consiste, si la source associée audit flux a un statut « suspect » et si un lien sur lequel circule ledit flux a un état « sûr», à rerouter ledit flux sur un second chemin dans lequel ledit lien dans un état « sûr» est remplacé par un lien ayant un état « suspect», et/ou si la source associée audit flux a un statut « sûre» et si un lien sur lequel circule ledit flux a un état « suspect», à rerouter ledit flux sur un second chemin dans lequel ledit lien dans un état « suspect » est replacé par un lien ayant un état « sûr».

8. Procédé selon l'une quelconque des revendications 5 à 7, dans lequel l'une et/ou l'autre des étapes consistant à qualifier un lien et à rerouter un flux est réalisée au niveau des nœuds du réseau ou au niveau du contrôleur.

9. Installation (1) comportant un réseau (10) de communication entre une pluralité de sources (A à G) et une cible (20), le réseau étant constitué de nœuds (i, j) et de liens (Li-j), chaque lien connectant deux nœuds, les nœuds ayant au moins une fonction de commutateur, **caractérisée en ce que** le réseau (10) comporte, en outre, un contrôleur (11) en communication avec chacun des nœuds, les nœuds et le contrôleur étant adaptés pour la mise en œuvre du procédé (100) de détection de sources illégitimes responsables d'une attaque distribuée par déni de service - DDoS du type par inondation de lien sur ledit réseau, ledit procédé étant conforme à l'une quelconque des revendications précédentes.

10. Installation (1) selon la revendication 9, dans lequel ledit procédé (100) de détection est mis en œuvre par les nœuds et le contrôleur sous forme logicielle, de préférence sous la forme une architecture du type « Software-Defined Networking » - SDN.

## Patentansprüche

1. Verfahren (100) zur Detektion illegitimer Quellen, die für eine Denial-of-Service-Attacke - DDoS des Typs durch Linküberschwemmung in einem Netzwerk (10) verantwortlich sind, das aus Knoten und aus Links besteht, wobei jeder Link (Li-j) zwei Knoten (i, j) verbindet, wobei die Knoten mindestens eine Netzwerkumschaltfunktion haben, wobei die Attacke die Aufgabe hat, ein mit dem Netzwerk verbundenes Ziel (20) durch Überschwemmen von mindestens einem Link des Netzwerks, bezeichnet als Ziellink, mittels einer Vielzahl von Strömen zu überschwemmen, die von einer Vielzahl von Quellen gesendet werden, die mit dem Netzwerk verbunden sind, wobei die Vielzahl von Quellen die illegitimen Quellen und legitime Quellen aufweist, so dass der Durchsatz insgesamt über den Ziellink eine Kapazität des Ziellinks überschreitet, wobei das Netzwerk ferner einen Controller (11) aufweist, der imstande ist, mit jedem der Knoten zu kommunizieren,
**dadurch gekennzeichnet, dass** das Verfahren darin besteht:
- durch jeden Knoten (i) und für jeden Link (Li-j), der aus dem Knoten hervorgegangen ist, eine lokale Liste von Quellen (Fi-j) zu aktualisieren (110), die dem Link zugeordnet ist, die die Quellen erfasst, deren Ströme zum entsprechenden Zeitpunkt über den Link zirkulieren;
- durch jeden Knoten (i) den Überlastungszustand jedes Links (Li-j) zu bestimmen (120), der aus dem Knoten ausgehend von der lokalen Liste von Quellen (Fi-j) hervorgegangen ist, die dem Link zugeordnet ist;
- dass, wenn der Zustand des Links überlastet ist, der Knoten (i) dem Controller (11) die lokale Liste von Quellen (Fi-j) übermittelt (130), die dem Link zugeordnet ist,
- durch den Controller (11) mindestens eine Detektionsregel auf jede Quelle anzuwenden (140), die in der lokalen Liste angegeben ist, wobei die Detektionsregel erlaubt, ein Verhalten der Quelle zu verfolgen; und
- wenn die Quelle die Detektionsregel verifiziert, der Quelle durch den Controller (11) einen Status "verdächtig" zu verleihen, anderenfalls der Quelle einen Status "sicher" zu verleihen; und
- durch den Controller (11) eine konsolidierte Quellenliste (LS) zu aktualisieren, die mindestens die Quellen aufweist, deren Status zum laufenden Zeitpunkt "verdächtig" lautet.

2. Verfahren (100) nach einem der vorangehenden Ansprüche, wobei der Schritt, der darin besteht zu verifizieren (120), ob ein Link (Li-j) überlastet ist, darin besteht, durch mindestens einen der zwei durch den Link verbundenen Knoten einen Durchsatz insgesamt der Ströme, die zu dem entsprechenden Zeitpunkt über den Link zirkulieren, zu berechnen und den berechneten Durchsatz insgesamt mit einer Referenzkapazität des Links zu vergleichen, wobei der Link überlastet ist, wenn der Durchsatz insgesamt größer oder gleich der Referenzkapazität ist.

3. Verfahren (100) nach einem der vorangehenden Ansprüche, wobei der eine und/oder der andere der Schritte, der darin besteht zu verifizieren (120), ob der Link (Li-j) überlastet ist, mindestens eine Detektionsregel anzuwenden (140) und der Quelle einen Status "verdächtig" oder "sicher" zuzuweisen, von mindestens einem der zwei Knoten (i, j) durchgeführt wird, die durch den Link oder durch den Controller (11) verbunden sind, wobei die für diese Schritte notwendigen Informationen zwischen dem mindestens einen der zwei Knoten, die durch den Link verbunden sind, und dem Controller ausgetauscht werden.

4. Verfahren (100) nach einem der vorangehenden Ansprüche, wobei die mindestens eine Detektionsregel ausgewählt ist aus:
- einer ersten Regel, die darauf abzielt zu verifizieren, ob eine Anzahl von Malen, dass eine Quelle an einer Linküberlastung beteiligt ist, höher als ein vorher festgelegter Score (T0) ist;
- einer zweiten Regel, die darauf abzielt zu verifizieren, ob ein zugelassener Durchsatz der Ströme, die einer Quelle zugeordnet sind, zum laufenden Zeitpunkt größer als ein mittlerer Durchsatz ist, der der Quelle zugeordnet ist;
- einer dritten Regel, die darauf abzielt zu verifizieren, ob, nachdem ein Strom einer Quelle auf einen anderen Pfad umgeleitet wurde, die Quelle aufhört, den Strom zu senden;
- einer vierten Regel, die darauf abzielt zu verifizieren, ob, nachdem ein Strom einer Quelle auf einen anderen Pfad umgeleitet wurde, die Quelle einen Durchsatz des Stroms erhöht.

5. Verfahren (100) nach einem der vorangehenden Ansprüche, **dadurch gekennzeichnet, dass** es ferner die folgenden Schritte aufweist, die darin bestehen:
- Qualifizieren (150) eines Links (Ln-m) des Netzwerks durch Verifizieren eines Kriteriums, das auf dem Status der Quellen beruht, deren Ströme über den Link zu dem entsprechenden Zeitpunkt zirkulieren, wobei der Status der Quellen von der konsolidierten Quellenliste (LL) bereitgestellt wird, wobei der Link einem Zustand "verdächtig" zugeordnet wird, wenn das Kriterium eingehalten wird, und einem Zustand "sicher", wenn das Kriterium nicht eingehalten wird;
- Umleiten (160) eines Stroms einer Quelle, der über einen ersten Pfad befördert wird, damit er über einen zweiten Pfad befördert wird, in Abhängigkeit vom Status der Quelle, der von der konsolidierten Quellenliste (LL) bereitgestellt wird, und vom Zustand von mindestens einem Link des ersten Pfads.

6. Verfahren (100) nach Anspruch 5, wobei das Kriterium zur Qualifizierung eines Links als "verdächtig" darin besteht zu verifizieren, ob ein Teildurchsatz der Ströme über den Link, deren Quellen einen Status "verdächtig" haben, dividiert durch einen Teildurchsatz der Ströme über den Link, deren Quellen einen Status "sicher" haben, größer als ein Referenzgrenzwert (L0) ist.

7. Verfahren (100) nach Anspruch 5 oder Anspruch 6, wobei der Schritt, der in der Umleitung eines Stroms besteht, wenn die dem Strom zugeordnete Quelle einen Status "verdächtig" hat und wenn ein Link, über den der Strom zirkuliert, einen Zustand "sicher" hat, den Strom über einen zweiten Pfad umzuleiten, wobei der Link in einem Zustand "sicher" von einem Link ersetzt wird, der einen Zustand "verdächtig" hat, und/oder wenn die dem Strom zugeordnete Quelle einen Status "sicher" hat und ein Link, über den der Strom zirkuliert, einen Zustand "verdächtig" hat, den Strom über einen zweiten Pfad umzuleiten, wobei der Link in einem Zustand "verdächtig" von einem Link ersetzt wird, der einen Zustand "sicher" hat.

8. Verfahren nach einem der Ansprüche 5 bis 7, wobei der eine und/oder der andere der Schritte, die darin bestehen, einen Link zu qualifizieren und einen Strom umzuleiten, im Bereich der Knoten des Netzwerks oder im Bereich des Controllers durchgeführt wird.

9. Anlage (1), aufweisend ein Kommunikationsnetzwerk (10) zwischen einer Vielzahl von Quellen (A bis G) und einem Ziel (20), wobei das Netzwerk aus Knoten (i, j) und aus Links (Li-j) besteht, wobei jeder Link zwei Knoten verbindet, wobei die Knoten mindestens eine Umschaltfunktion haben, **dadurch gekennzeichnet, dass** das Netzwerk (10) ferner einen Controller (11) in Kommunikation mit jedem der Knoten aufweist, wobei die Knoten und der Controller für die Durchführung des Verfahrens (100) zur Detektion illegitimer Quellen geeignet sind, die für eine durch Denial-of-Service - DDoS verbreitete Attacke vom Typ Linküberschwemmung über das Netzwerk verantwortlich sind, wobei das Verfahren einem der vorangehenden Ansprüche entspricht.

10. Anlage (1) nach Anspruch 9, wobei das Detektionsverfahren (100) durch die Knoten und den Controller softwaremäßig, vorzugsweise in Form einer Architektur des Typs "Software-Defined Networking" - SDN, angewendet wird.

## Claims

1. A method (100) for detecting illegitimate sources responsible for a distributed denial of service DDoS attack of the link flooding type in a network (10) made up of nodes and links, each link (Li-j) connecting two nodes (i, j), the nodes having at least one network switching function, the attack being intended to isolate a target (20) connected to the network by flooding at least one link of the network, called target link, using a plurality of streams emitted by a plurality of sources connected to the network, the plurality of sources including illegitimate sources and legitimate sources, such that the total throughput on the target link exceeds the capacity of said target link, the network further including a controller (11) able to communicate with each of the nodes,
**characterized in that** the method consists in:
- updating (110), by each node (i) and for each link (Li-J) from said node, a local list of sources (Fi-J) associated with said link, identifying the sources whose streams are circulating on said link at the considered instant;
- determining (120), by each node (i), the congestion state of each link (Li-j) from said node from the local list of sources (Fi-j) associated with said link;
- when the state of said link is congested, said node (i) sends (130) the controller (11) the local list of sources (Fi-j) associated with said link,
- implementing (140), by the controller (11), at least one detection rule on each source indicated in said local list, said detection rule allowing a behavior of said source to be monitored; and
- if said source verifies said detection rule, assigning, by the controller (11), a "suspect" status to said source, otherwise assigning a "safe" status to said source; and
- updating, by the controller (11), a consolidated list of sources (LS) including at least the sources whose status at the current instant is "suspect".

2. The method (100) according to any one of the preceding claims, wherein the step consisting in verifying (120) whether a link (Li-j) is congested consists in calculating, by at least one of the two nodes connected by said link, a total throughput of the streams circulating at the considered instant on said link and comparing the total calculated throughput to a reference capacity of said link, said link being congested when the total throughput is greater than or equal to the reference capacity.

3. The method (100) according to any one of the preceding claims, wherein one and/or the other of the steps consisting in verifying (120) whether said link (Li-j) is congested, implementing (140) at least one detection rule, and assigning said source a "suspect" or "safe" status, is carried out by at least one of the two nodes (i, j) connected by said link or by the controller (11), the information required for the steps being exchanged between said at least one of the two nodes connected by said link and the controller.

4. The method (100) according to any one of the preceding claims, wherein said at least one detection rule is chosen among:
- a first rule seeking to verify whether a number of times that a source is involved in a link congestion exceeds a predefined score (T0);
- a second rule seeking to verify whether an aggregated throughput of the streams associated with a source is, at the current instant, greater than an average throughput associated with said source;
- a third rule seeking to verify whether, once a stream of a source is rerouted on another path, said source ceases to emit said stream;
- a fourth rule seeking to verify whether, once a stream of a source is rerouted on another path, said source increases a throughput of said stream.

5. The method (100) according to any one of the preceding claims, **characterized in that** it further includes the steps consisting in:
- qualifying (150) a link (Ln-m) of the network by verifying a criterion based on the status of the sources whereof the streams are circulating on said link at the considered instant, the status of the sources being given by the consolidated list of sources (LL), said link being associated with a "suspect" status when said criterion is respected and with a "safe" status when the criterion is not respected;
- rerouting (160) a stream of a source conveyed on a first path so that it is conveyed on a second path, based on the status of said source, given by the consolidated list of sources (LL), and the status of at least one link of the first path.

6. The method (100) according to claim 5, wherein the criterion for qualifying a link as "suspect" consists in verifying whether a partial throughput of the streams on said link whereof the sources have a "suspect" status divided by a partial throughput of the streams on said link whereof the sources have a "safe" status is above a reference threshold (L0).

7. The method (100) according to claim 5 or claim 6, wherein the step consisting in rerouting a stream consists, if the source associated with said stream has a "suspect" status and if the link on which said stream is circulating has a "safe" status, in rerouting said stream on a second path in which said link with a "safe" status is replaced by a link having a "suspect" status, and/or if the source associated with said stream has a "safe" status and if a link on which said stream is circulating has a "suspect" status, in rerouting said stream on a second path in which said link with a "suspect" status is replaced by a link having a "safe" status.

8. The method according to any one of claims 5 to 7, wherein one and/or the other of the steps consisting in qualifying a link and in rerouting a stream is carried out at the nodes of the network or at the controller.

9. A facility (1) including a communication network (10) between a plurality of sources (A to G) and a target (20), the network being made up of nodes (i, j) and links (Li-j), each link connecting two nodes, the nodes having at least one switching function, **characterized in that** the network (10) further includes a controller (11) in communication with each of the nodes, the nodes and the controller being suitable for implementing the method (100) for detecting illegitimate sources responsible for a distributed denial of service DDoS attack of the link flooding type on said network, said method being according to any one of the preceding claims.

10. The facility (1) according to claim 9, wherein said detection method (100) is implemented by the nodes and the controller in software form, preferably in the form of an architecture of the "Software-Defined Networking" - SDN - type.
